**Europäisches Patentamt**

**European Patent Office**

**Office européen des brevets**

(11) Publication number: **0 018 138**
**A1**

## (12) EUROPEAN PATENT APPLICATION

(21) Application number: **80301073.5**

(22) Date of filing: **03.04.80**

(51) Int. Cl.³: **C 08 F 236/10**

(30) Priority: **23.04.79 US 32328**

(71) Applicant: **MOBIL OIL CORPORATION, 150 East 42nd Street, New York New York 10017 (US)**

(43) Date of publication of application: **29.10.80 Bulletin 80/22**

(72) Inventor: **Sherman, Anthony Michael, 117 Stephenville Parkway, Edison, New Jersey 08817 Middlesex (US)**

(84) Designated Contracting States: **BE DE FR GB IT NL**

(74) Representative: **Cooper, John Anthony, Mobil Court 3 Clements Inn, London WC2A 2EB (GB)**

(54) Abrasion resistant p-methylstyrene-butadiene rubber.

(57) There is provided a synthetic rubber that is a copolymer containing, by weight, about 75–60% 1,3-butadiene and about 25–40% p-methylstyrene. This rubber has an abrasion resistance considerably higher than that of conventional SBR.

EP 0 018 138 A1

0018138

ABRASION RESISTANT p-METHYLSTYRENE-BUTADIENE RUBBER

This invention is directed to copolymers of p-methylstyrene with butadiene which produce rubbers having high abrasion resistance.

Styrene-butadiene rubber (SBR) is a well known synthetic rubber widely used in tire manufacture. It is the discovery of this invention that a rubber containing p-methylstyrene instead of styrene, when compounded and cured, has abrasion resistance significantly greater than SBR compound. This can increase tire tread mileage. Insofar as is now known it has not been proposed to manufacture synthetic rubber from p-methylstryene.

In British Patent No. 582,571, there is disclosed a copolymer of butadiene with a material called "para-methyl-styrene". This material is characterized as being unable to be homopolymerized and is stated to be only 57% pure. This material can not be the high purity p-methylstyrene used by the present inventor, because his material is readily homopolymerizable.

This invention provides a rubber comprising a copolymer of p-methylstyrene and butadiene containing between about 75% and about 60%, by weight, butadiene and between about 25% and about 40%, by weight, of p-methylstyrene.

One monomer used in preparing the copolymer rubbers of this invention is p-methylstyrene. It is within the contemplation of this invention to use mixtures of methylstyrene rich in p-methylstyrene. Such mixtures contain at least 95 weight percent, preferably 97-99 weight percent, p-methylstyrene and less than 0.1 weight percent o-methylstyrene with the balance being m-methylstyrene. A typical mixture contains, by weight, about 95 percent p-methylstyrene, about 5 percent m-methylstyrene, and about 0.05 percent o-methylstyrene. The mixtures are obtained by catalytic dehydrogenation of the mixtures of ethylmethyl benzene isomers described in U.S. Patent No. 4,086,287 to which reference is made.

The other monomer is butadiene, a well known and commercially available diolefin. Generally, the copolymer rubber contains about 3 parts by weight butadiene and about one part by weight p-methylstyrene. In terms of weight percent, the copolymer will contain between about 25% and about 40% p-methylstyrene and between about 75% and about 60% butadiene.

The copolymer rubber is prepared using well known emulsion polymerization methods and techniques. The comonomers are emulsified in water using emulsifying agents. Typical emulsifying agents are sodium oleate, sodium stearate, sulfonated fatty acids, saponin, and aryl sulfonic acids. Catalysts generally are free radical initiators or oxidizing agents, such as alkali metal perborates, alkali metal persulfates, hydrogen peroxide, organic peroxides and organic peracids. A modifying agent is used, such as carbon tetrachloride, hexachloroethane, chloroalkyl cyanides, alkyl mercaptans, xanthogen disulfides, and thiuram disulfides.

Generally, the emulsion polymerization system can have the following composition, expressed in parts by weight per hundred parts of monomers (PHM):

| | |
|---|---|
| Butadiene | 60-75 parts |
| p-Methylstyrene | 25-40 parts |
| Emulsifying Agent | 1-5 parts |
| Polymerization Catalyst | 0.1-1 part |
| Modifying Agent | 0.1-1 part |
| Water | 100-300 parts |

The polymerization reaction is carried out at temperatures of about 40-60°C. In general, reaction times are about 10-15 hours.

At the end of the emulsion polymerization, unreacted catalyst is destroyed with a shortstop, such as hydroquinone, added to the latex. The rubber is recovered from the latex by pouring the latex into dilute sulfuric acid and recovering the rubber crumb. The crumb is then water-washed and dried.

Compounding of p-methylstyrene-butadiene rubber is similar to that of natural rubber. Softeners, such as stearic acid (1-2 PHR), are used, as well as extenders and processing aids, such as viscous and highly aromatic mineral oils. Fillers, (carbon black) curing agents (sulfur or selenium), accelerators (thiazole compounds), and activators (zinc oxide) are used. Temperature and time of cure are similar to those used for natural rubber.

The following examples demonstrate the rubbers of this invention in comparison to styrene-butadiene rubber (SBR). In the examples and tables, the p-methylstyrene-butadiene rubber of this invention is abbreviated PMSBR. Unless designated otherwise, all units are by weight expressed in parts per hundred parts of monomers (PHM) or of rubber (PHR).

## EXAMPLE 1

PMSBR and SBR latices were prepared by emulsion polymerization using the following charging recipes:

| Component | Amount (PHM) | |
|---|---|---|
| | S B R | PMSBR |
| Styrene | 26.0 | --- |
| p-Methylstyrene | -- | 28.4 |
| 1,3-Butadiene | 74.0 | 71.6 |
| t-Dodecyl mercaptan | 0.25 | 0.24 |
| Sodium stearate | 5.0 | 5.0 |
| Potassium persulfate | 0.3 | 0.3 |
| Deionized water | 180.0 | 180.0 |

The sodium stearate, potassium persulfate, and water were weighed into a 2-liter beaker. The mixture was stirred and warmed to 60°C. on a hot plate until clear. The soap/initiator solution was charged into a clean, dry, $N_2$-purged and evacuated autoclave reactor. A solution of styrene, or p-methylstyrene, and t-dodecyl mercaptan was prepared and charged to the reactor. Then, 1,3-butadiene was charged to the reactor from a one liter Hoke bomb. With stirring, the reactor was set at a temperature of 50°C. and the polymerization was carried out for 12 hours.

After 12 hours polymerization at 50°C., the latex was cooled to room temperature (ca. 20°C.) and 15 drops of anti-foam agent was added. After 15 minutes, stirring was stopped and unreacted butadiene was vented from the autoclave. Antioxidant was added to the latex and unreacted monomers were stripped by vacuum distillation at 60°C. at 25 mm. Hg, using a rotary evaporator.

The latex poured into 1/2 its volume of 0.7% aqueous $H_2SO_4$ in a blender to coagulate the rubber crumb. The crumb was water-washed and vacuum-dried in an oven for 64 hours at 80°C., using a nitrogen sweep.

Polymerization results are set forth in Table I and analytical data on the rubbers are set forth in Table II.

## TABLE I

| Rubber Type | Conversion | | Yield |
| --- | --- | --- | --- |
| | Before Stripping | After Stripping | |
| SBR | 61% | 62% | 268 g (54%) |
| PMSBR | 62% | 63% | 251 g (50%) |

## TABLE II

| Rubber Type | Volatiles | Gel | Intrinsic Viscosity | Mooney Viscosity ML-4 @ 100°C. | Composition, mole % Bd by $n_D^{25}$ | by NMR |
| --- | --- | --- | --- | --- | --- | --- |
| SBR | 0.32% | 6.7% | 2.02 | 29 | 87 | 89 |
| PMSBR | 0.21% | 5.9% | 2.01 | 30 | -- | 88 |

## Example 2

Each of the rubbers as prepared in Example 1 was compounded on a standard rubber mill using the following compounding recipe:

| Material | PHR |
| --- | --- |
| Rubber | 100.0 |
| Carbon black | 50.0 |
| Extender oil * | 25.0 |
| Zinc Oxide | 3.0 |
| Stearic acid | 1.0 |
| Thiazole accelerator | 1.0 |
| Sulfur | 1.75 |

*The extender oil was a viscous, aromatic mineral oil having an API gravity of 10.7, a pour point of +70°F., a viscosity of 130 SVS at 210°F., and an aniline point of 115°F.

A Brabender Plasticorder mixer was used to characterize and compare curing of the rubbers. The mixer was operated at 63 rpm and 121°C. The results are set forth in Table III.

<u>Table III</u>

| Rubber Type | Min. Torque | Scorch Time | Max. Torque | Cure Time |
|---|---|---|---|---|
| SBR | 760 m.g | 35 min | 1720 m.g | 80 min |
| PMSBR | 800 m.g | 37 min | 1860 m.g | 75 min |

0018138

## Example 3

Test specimens were prepared by compression molding and curing the compounds from Example 2 for 75 min. at 145ºC. Physical testing data for the vulcanizates are set forth in Table IV.

## Table IV

| T e s t | ASTM Conditions | S a m p l e | |
|---|---|---|---|
| | | SBR | PMSBR |
| Hardness, Shore A | D2240-75 | 58 | 58 |
| 300% Modulus, $lb.in.^{-2}$ | D 412-68 | 608 | 608 |
| Tensile Strength, $lb.in^{-2}$ | D 412-68 | 1766 | 1809 |
| Elongation at Break, % | D 412-68 | 512 | 538 |
| Abrasion Resistance (Taber), ave. mg. wt. loss/1000 cycles | D1044-73 (5000 cycles) | 120 | 85 |
| Brittle Point, $^{\circ}$C. | D2137-75 | -52 | -54 |
| Specific Gravity | D 297 | 1.062 | 1.055 |
| Compression Set, % | D 395-69 (Method B) | 74.2 | 74.0 |
| Tear Strength, $lb.in^{-1}$ | D 624-73 (Die "C") | 221 | 222 |

From the data in Table IV, it will be noted that the properties of PMSB compound were generally equivalent to those of the SBR compound. The PMSBR abrasion resistance, however, was significantly better than that of the SBR compound. This property is of importance in tire manufacture and could result in increased tire tread life.

Although the present invention has been described with preferred embodiments, it is to be understood that modifications and variations may be resorted to, without departing from the spirit and scope of this invention, as those skilled in the art will readily understand. Such variations and modifications are considered to be within the purview and scope of the appended claims.

0018138

CLAIMS:

1. A rubber comprising a copolymer of p-methyl-styrene and butadiene containing between about 75% and about 60%, by weight, 1,3-butadiene and between about 25% and about 40%, by weight, of p-methylstyrene.

2. The rubber of Claim 1, wherein the amount of 1,3-butadiene is about 72% and the amount of p-methylstyrene is about 28%.

European Patent Office

**EUROPEAN SEARCH REPORT**

0018138

Application number

EP 80 30 1073

| Category | Citation of document with indication, where appropriate, of relevant passages | Relevant to claim | CLASSIFICATION OF THE APPLICATION (Int. Cl. 3) |
|---|---|---|---|
| X | INDUSTRIAL AND ENGINEERING CHEMISTRY, vol. 40, no. 12, 1948 pages 2371-2373 American Chemical Society New York, U.S.A. C.S. MARVEL et al.: "Copolymers of Butadiene with Alkyl, Aryl, Alkoxyl and Phenoxyl Styrenes"  * Page 2372, table IV, example 4 * | 1,2 | C 08 F 236/10 |
| D,X | GB - A - 582 571 (STANDARD OIL)  * Claims 3,5 * | 1,2 | TECHNICAL FIELDS SEARCHED (Int.Cl. 3)  C 08 F 236/10 |
| X | GB - A - 1 246 914 (BRIDGESTONE)  * Claim 6; page 3, lines 28-42 * | 1,2 | |
| X | DE - B - 1 131 410 (BAYER)  * Example 2 * | 1,2 | |

## DOCUMENTS CONSIDERED TO BE RELEVANT

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-06-1980 | V. HUMBEECK |

EPO Form 1503.1   06.78